# EUROPEAN PATENT SPECIFICATION

(11) **EP 3 332 052 B1**
(45) Date of publication and mention of the grant of the patent: **15.05.2019**
(21) Application number: 16788585.4
(22) Date of filing: 07.09.2016
(51) Int. Cl.: D01F 6/60, B60C 1/00, D02G 3/04, D02G 3/28, D02G 3/48, D01F 6/62

(54) **A PLIED TWISTED CAP PLY REINFORCEMENT HYBRID YARN**
VERZWIRNTES HYBRIDGARN FÜR ZWISCHENBAUVERSTÄRKUNG
FIL HYBRIDE DE RENFORCEMENT DE NAPPE DE SOMMET TORSADÉ À PLIS

(30) Priority: 18.09.2015 TR 201511726
(43) Date of publication of application: 13.06.2018
(73) Proprietor: Kordsa Teknik Tekstil Anonim Sirketi, Izmit/Kocaeli (TR)
(72) Inventor: FIDAN, Saadettin, Izmit/Kocaeli (TR); AKSOY, Kursat, Izmit/Kocaeli (TR); MERTOL, Bekir Anil, 41310 Izmit/Kocaeli (TR)
(74) Representative: Dericioglu Kurt, Ekin
(86) International application number: PCT/TR2016/050337
(87) International publication number: WO 2017/048208

(56) References cited:
- WO-A1-2014/001039
- WO-A1-2015/137901
- KR-B1- 100 829 261
- AYSE AYTAÇ ET AL: "FATIGUE PROPERTIES OF NYLON 66/POLYESTER HYBRID CORDS", RUBBER CHEMISTRY AND TECHNOLOGY, vol. 84, no. 4, 1 December 2011 (2011-12-01), pages 482-492, XP055330377, US ISSN: 0035-9475, DOI: 10.5254/1.3592292
- AYAA E AYTA ET AL: "Nylon 66/polyester hybrid cords: 1. Design and investigation of properties", FIBERS AND POLYMERS, THE KOREAN FIBER SOCIETY, HEIDELBERG, vol. 12, no. 2, 7 April 2011 (2011-04-07), pages 252-257, XP019894680, ISSN: 1875-0052, DOI: 10.1007/S12221-011-0252-8

## Description

### Field of the Invention

The present invention relates to a plied twisted cap ply reinforcement hybrid yarn which is improved in order to enhance the high speed performance of the pneumatic radial tires used in motor vehicles, which is wrapped between the tread and belt layer, and which is formed by twisting yarns with different properties together.

### Background of the Invention

The vehicle tires that are used by compressing air inside are called pneumatic vehicle tires, and they are commonly used in motor vehicles. The pneumatic tires are classified by the angle made by the cords forming the carcass fabric texture forming the tire with the equatorial plane of the cords. The tire obtained by the cords making 65-90° angle with the equatorial plane of the tire is called radial vehicle tire.

In belt packages present in radial passenger vehicle tires used today, there are at least two cross belt layers, and a textile cap ply reinforcement layer wrapped spirally in circumferential direction on the belt. The cross belt layers comprising steel cords provide the lateral and circumferential rigidity required for the tire performance. The function of the cap ply layer is to decrease the tire growth caused by in tire diameter the centrifugal force occurring at high speed, and decrease the pantographic movements between the belt layers beside the said growth, thereby avoiding belt edge separations and improving tire performance.

It is the radial pressure (restraining force) applied by the cap ply layer on the belt package under dynamic conditions which enables it to improve the tire performance. The two important properties enabling the said force to be effective is the modulus and thermal shrink force of the textile reinforcements at service temperature. Beside this, after the vulcanization process of the tire, permanent stress/tension occurring on the cap ply reinforcement cords as a result of cooling can be considered as the third factor.

In the current technique, nylon, polyester and hybrid cord applications can be given as examples for reinforcement types used in cap ply applications.

In the current technique, nylon 6.6 is used by being wrapped as single yarn/cord or strips formed of parallel yarns or cords on the steel belt package such that it will make 0-5° angle with the equatorial plane as single or a plurality of layers in yarn and cord constructions such as 940x1, 1400x1, 940x2, 1400x2, 1880x2 and 2100x1 depending on the speed class of the tire. When nylon 6.6 is applied as polymer, cord modulus decreases at increased temperature at high speeds, while the thermal shrink force increases, and thus it can compensate the difference due to the decrease in modulus. Furthermore, the nylon 6.6 material having high fatigue resistance and excellent rubber adhesion are advantages enabling it to be commonly used in cap ply reinforcement layer.

In high speed tires, when nylon 6.6 yarn is used in 940x2 construction, the cord density is increased in order not to increase the layer number above two, excluding the additional belt edge strips. The cord density is defined with the number of cords in 10 cm, and it is called as "epdm". This density is increased up to 160 epdm in several cases. In this case, the rivet area is decreased, and thus rubber penetration between the cords becomes difficult. The insufficiency of the penetration decreases the dynamic adhesion between the cords.

Another application is to use nylon 6.6 yarn in 1400x2 construction in high speed tires. In this embodiment, total layer weight increases due to the cord thickness, and this causes the tire weight to increase and fuel consumption. At the same time, the rolling resistance of the tire increases depending on the increased rubber amount.

Another product used in cap ply reinforcement layers is polyester. Especially, polyethylene terephthalate (PET) is preferred in different constructions due to its high modulus. However, the modulus of the PET drops significantly at high temperature, while the adhesion of the cord on the rubber decreases due to thermal degradation. Furthermore, the fatigue resistance of the PET under bending and compression is weaker relative to the nylon 6.6 yarn, however it is a much cheaper material.

In the current technique, in high speed tires, especially aramid/nylon 6.6 hybrid cords are commonly used. The advantage of this embodiment is that it can be used as single layer, the rivet area is wide enough, and the total amount of rubber on the cap ply reinforcement layer is reduced. It is aimed to decrease fuel consumption with decreased rubber amount. Besides, it can easily be processed since it has low initial modulus, and it also effectively improves the high speed performance of the tire since it has high modulus after process. However, it is much more expensive than nylon 6.6 and polyester. Patent documents nos. US6533012 and US6799618 can be given as examples for the patents disclosing the application of aramid/nylon hybrid cords as cap ply reinforcement.

Aside from the above mentioned applications, in patent documents no US8640753 and US8813467, related to the use of hybrid yarns as cap ply reinforcement in the tire, it is disclosed that the hybrid yarns obtained by intermixing the yarns with high and low modulus without twisting are used in high performance tires. However, in the intermixing process of the said yarn filaments with each other the yarn can lose tenacity. In the application disclosed in patent document no US7165586, the cords obtained by using yarns comprised of filaments including nylon and PET mixture (for example the middle part of each filament is PET, and the surface is nylon) are used as reinforcement in the tires. In the said document, each filament forming the yarns comprises polyester and nylon mixture. In the patent document no US7572745, the hybrid yarn construction comprises co-para and meta aramid yarns, and it is used in hose technology. The hybrid co-para and meta aramid yarns being together increases the fatigue resistance and burst strength in the hose. In this document, it is disclosed only aramid yarns can be used, and it is not disclosed that different kinds of yarns can be twisted together. Furthermore, due to the initial modulus of aramid being too high (they can contact steel cords on the belt layer by cutting the rubber on the belt due to high elongation/lifting, stress values of 2-3%), they cannot be used as cap ply reinforcement layer in tire technology, for this reason it is only mentioned their use in hose.

Additionally, the following documents are also present in the state of the art: WO2014/001039 discloses a hybrid cord containing polyester and polyamide yarns. KR100829261 discloses a hybrid cord obtained by twisting polyethylene and nylon 66 filaments. The said document defines the linear mass density of the yarns used as 900-1100 deniers and 800-850 deniers respectively.

"Fatigue Properties of Nylon66/Polyester Hybrid Cords", as suggested by the title, studies the fatigue properties of Nylon66/Polyester Hybrid Cords. As stated in the introduction (lines 7-8 of the introduction), the said study only dealt with cords containing Nylon 66 and polyester yams.

"Nylon66/polyester hybrid cords: 1. Design and investigation of properties" also deals with Nylon 66 hybrids.

WO2015/137901 discloses a cap ply reinforcement layer comprising polyethylene terephthalate (PET) and nylon 6.6. The said document discloses that the individual yams are pre-twisted.

The advantages and disadvantages of the applications in the current technique used in cap ply reinforcement layer are mentioned above. In any of these applications, the use of hybrid yarns obtained by plied twisting of different yarns in a reinforcement layer is not disclosed.

### Summary of the Invention

The objective of the present invention is to provide a cap ply reinforcement hybrid plied yarn which forms the layer located between the tread and the belt package in radial tires used in motor vehicles, and which is obtained by plied twisting at least two different yarns together.

### Detailed Description of the Invention

A cap ply reinforcement hybrid yarn developed to fulfill the objectives of the present invention is illustrated in the accompanying figure, in which:

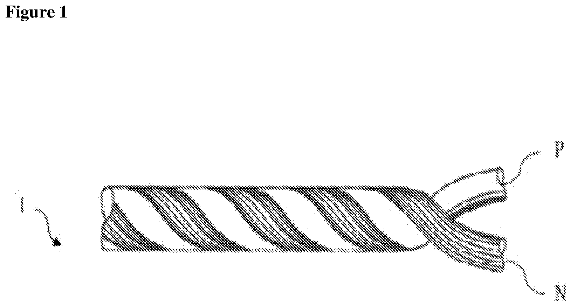

Figure 1 is the view of the plied twisted hybrid yarn used in the inventive cap ply reinforcement hybrid yarn.

The components shown in the figures are each given reference numbers as follows:
**1.** Cap ply reinforcement hybrid yarn
**N.** Aliphatic Polyamide
**P.** Polyester

The textile reinforcement layer located between the upper layer of the belt package and the tread is called as cap ply reinforcement layer. The advantages and disadvantages of the applications used for this layer in the previous technique are explained. In our invention, the negative aspects caused by the reinforcements used in cap ply layer applications are solved by the reinforcing plied twisted hybrid yarn formed by twisting the yarns having different characteristics together.

You can find the definitions of several terms used in the description while disclosing the invention.

"Polyester (P)" is a class of polymers or in details they are the condensation polymers comprising ester functional groups in polyester main bonds. Even though the polyesters are available in nature, the polyester generally expresses a wide range of products belonging to synthetic polyesters (P) comprising all polyethylene terephthalate and polycarbonate. Polyethylene terephthalate (PET) is the most commonly used polyester type in tire industry.

"Polyamide" is also known as nylon, and it refers to the most commonly known nylon fiber. The most commonly known and used three main molecule compositions are nylon 6, nylon 6.6, and nylon 4.6. Polyamide is flexible, and for this reason it is more resistant to fatigue. Polyester is less flexible, and its modulus is higher than the said nylon types.

"Dtex" refers to the weight of a yarn in length of 10.000 as gram. It is the unit of the yarn thickness, in other words it is the unit of its linear density.

"Carcass" enables the pressurized air carrying the load in the tire to be kept inside the tire. The carcass is obtained by placing textile or steel cords into rubber matrix. The cords forming the carcass provides coupling with the bead by being wrapped around the bead wire.

"Bead" enables the tire to contact and connect to the wheel rim, it is manufactured from steel wires and it has an annular structure.

The part of the tire contacting the road is called as "tread".

"Belt" is the structure on the body layers extending with 90 ° angle from bead to bead, making acute angle with the equatorial plane present only on the tread area, and comprised of steel cords parallel to each other formed of generally two layers. The belt package formed of two layers on the tread area and the carcass is around the tire as ring. The parallel cords on the belt layer can be woven or non-woven, and it is inclined relative to the equatorial plane of the tire.

"Equatorial plane" is the plane vertical to the rotational axis of the tire and passing through the center of the tire tread.

"Twist" can be defined as bending the yarn around its own axis or the number of helix spirals in a certain length on the yarn. The number of twists in the yarn influences the yarn characteristics such as elasticity and fatigue resistance. The twist level is expressed with the number of rounds per meter, and it is shown as "tpm".

Plied twisting is defined as twisting more than one yarns which have no pre-twisting. The said plied twisted yarn is obtained by combining yarns (non twisted yarns) with each other which are not twisted seperately and then the said non twisted and combined yarns are twisted together in one direction The twisting direction may be S or Z.

"Pre-twisting" is the protective twist given to the yarn in yarn production. The yarn producers generally do not apply twisting process on the said yarn.

The present invention relates to obtaining a plied twisted hybrid yarn having optimal characteristics which form the cap ply reinforcement layer located between the tread and belt package for the radial passenger vehicle tires.

In the inventive cap ply reinforcement hybrid yarn (1), aliphatic polyamide (N) and polyester (P) are twisted together, and thus plied twisted hybrid yarn is obtained and the cap ply reinforcement layer is obtained from this yarn. In one embodiment of the invention, nylon 6.6 can be given as example for aliphatic polyamide (N), and polyethylene terephthalate (PET) can be given as example for polyester (P) yarn. The invention cannot be limited to the above mentioned examples, and it is mainly as it is described in the claims.

In the inventive cap ply reinforcement hybrid yarn (1), plied twisted hybrid yarn is obtained by twisting aliphatic polyamide (N) and polyester yarns together, one the said yarns is aliphatic polyamide (N) and the other one is polyester (P); and the ratio of the polyester (P) in the said polyester (P) yarn is minimum 90% by weight, and the ratio of aliphatic polyamide (N) in the said aliphatic polyamide (N) yarn is minimum 90% by weight.

In the current technique, only polyester (P) cord or hybrid yarn or cord use is seen. In this invention, two different yarns are subjected to plied twisting process together. By this means, the possible disadvantages occurring while they are being used on their own are eliminated, and the advantages are combined and the production of tire providing high speed performance is aimed. The effective modulus (elasticity) of the nylon/PET hybrid yarn is much higher than the hybrid cords comprising nylon and PET yarn in equal dtex value and in the same helix angle. The effective modulus being high allows the use of thinner yarns on the cap ply reinforcement layer, thereby reducing the amount of the rubber on the cap ply and reducing the rolling resistance and heating of the tire. Under dynamic conditions, the temperature being lower on the belt package, especially at the edge of the belt package delays the separation from the cap edge, and enables the tire life to increase.

In the inventive cap ply reinforcement hybrid yarn (1), since twisting process is applied on nylon 6.6/PET (aliphatic polyamide (N)/polyester (P)) hybrid yarns at once, energy required for twisting process is saved. There is no need to apply twisting process on the yarns again.

In a preferred embodiment of the invention, nylon 6.6 and PET yarns are connected/plied parallel to each other, and they are subjected to twisting process together. Single twisted yarn is obtained after twisting process, and it is called as plied twisted hybrid yarn.

NY940/PET1100, NY1400/PET1440, NY1880/PET1670 and NY2100/PET2200 can be given as examples for plied twisted hybrid yarn constructions to be used for this aim. The invention cannot be limited to the above mentioned examples, and it is mainly as it is described in the claims.

In one embodiment of the invention, yarn comprised of filaments obtained from the mixture of nylon 6.6 and nylon 6 polymers can be given as example for aliphatic polyamide (N) yarn.

The linear densities of each one of the aliphatic polyamide (N) and polyester (P) yarns forming the said cap ply reinforcement hybrid yarn (1) can vary between 200-3000 dtex values.

The difference between linear densities of each one of the aliphatic polyamide (N) and polyester (P) yarns forming the inventive cap ply reinforcement hybrid yarn (1) is maximum 20%. In one embodiment of the invention, the linear density difference between nylon 6.6 and PET should not exceed the ratio of 20%. In case the said difference is bigger, at the end of the thermal treatment applied during production, the diameter growth is experienced due to the asymmetry increasing in the yarn diameter, and this situation causes quality errors.

In the inventive cap ply reinforcement hybrid yarn (1), the plied twisting levels of the plied twisted hybrid yarns formed by twisting the aliphatic polyamide (N) and polyester (P) together can vary in range of 100 to 500 tpm. The best result is obtained in range of 150-250 tpm.

In one embodiment of the cap ply reinforcement hybrid yarn (1), nylon and PET yarns are twisted together, and thus plied twisted hybrid yarn is obtained. In yarn twisting applications, the twisting direction of yarns used in cord production and other textile yarns are expressed with S and Z letters. When the yarn is twisted in S direction, and the yarn is held vertically; a spiral is twisted in same direction with the middle part of letter S around the middle axis curve of the yarn. When the yarn is twisted in Z direction, the yarn twist direction shows inclination towards the middle part of letter Z.

In the invention, there is no pre-twisting of polyamide and polyester yarns in hybrid yarns. In an embodiment of the invention, the pre-twisting levels of the yarns are zero, in other words pre-twisting is not applied.

Adhesive is used in order to enable the hybrid yarns to be adhered to the rubber. The said adhesives are preferred to be RFL (resorcinol, formaldehyde, and latex) based or adhesives that do not comprise resorcinol or formaldehyde (for example comprising acrylic resin instead of RF) in range of 2% to 10% on plied twisted hybrid yarn surfaces.

## Claims

1. A cap ply reinforcement layer located between at least one tread and at least one belt package layer of a pneumatic radial tire **characterized in that** the said cap ply is comprised of at least two types of plied twisted yarns which are obtained by combining non twisted yarns with each other in one direction, wherein one of the said yarn is aliphatic polyamide (N), and the other one is polyester, and the ratio of the polyester (P) in the said polyester (P) yarn is minimum 90% by weight, and the ratio of the aliphatic polyamide (N) in the said aliphatic polyamide (N) yarn is minimum 90% by weight.

2. A cap ply reinforcement layer according to claim 1, **wherein** the said aliphatic polyamide (N) yarn is nylon, and the said polyester (P) yarn in polyethylene terephthalate (PET).

3. A cap ply reinforcement layer according to claim 2, **wherein** the said aliphatic polyamide (N) yarn is nylon 6.

4. A cap ply reinforcement layer according to claim 2, **wherein** the content of the said aliphatic polyamide (N) yarn is comprised of a blend of nylon 6.6 and nylon 6.

5. A cap ply reinforcement layer according to claim 1, **wherein** the linear densities of each one of the said aliphatic polyamide (N) and the said polyester (P) yarns are in a range of 200-3000 dtex.

6. A cap ply reinforcement layer according to claim 1, **wherein** the difference between linear densities of each one of the said aliphatic polyamide (N) and the said polyester (P) yarns is maximum 20%.

7. A cap ply reinforcement layer according to claim 1, **wherein** the said aliphatic polyamide (N) and the said polyester (P) yarns have a pre-twisting level value of zero.

8. A cap ply reinforcement layer according to claim 1, **wherein** the plied twisting level of the said aliphatic polyamide (N) and the said polyester (P) yarns is in a range of 100-500 tpm.

9. A cap ply reinforcement layer according to claim 1, **wherein** the plied twisting level of the said aliphatic polyamide (N) and the said polyester (P) yarns is in a range of 150-250 tpm.

10. A cap ply reinforcement layer according to claim 1, **wherein** the plied twisting direction of the said aliphatic polyamide (N) and the said polyester (P) yarns is Z during twisting together.

11. A cap ply reinforcement layer according to claim 1, **wherein** the plied twisting direction of the said aliphatic polyamide (N) yarn and the said polyester (P) yarn is S during twisting together.

## Patentansprüche

1. Verstärkungsschicht aus einer Kappenlage, die zwischen mindestens einer Lauffläche und mindestens einer Gürtelpaketlage eines Radialluftreifens liegt, **dadurch gekennzeichnet, dass** die Kappenlage aus mindestens zwei Arten von gezwirnten Garnen besteht, die durch Kombinieren von nicht gezwirnten Garnen miteinander in einer Richtung erhalten werden, wobei eines der Garne aliphatisches Polyamid (N) und das andere Polyester ist, und das Verhältnis des Polyesters (P) in dem Polyester (P) Garn mindestens 90 Gew.-% beträgt, und das Verhältnis des aliphatischen Polyamids (N) in dem aliphatischen Polyamid (N) Garn mindestens 90 Gew.-% beträgt.

2. Verstärkungsschicht aus einer Kappenlage nach Anspruch 1, **wobei** das aliphatische Polyamid (N) Garn Nylon ist und das Polyester (P) Garn aus Polyethylenterephthalat (PET) besteht.

3. Verstärkungsschicht aus einer Kappenlage nach Anspruch 2, **wobei** das aliphatische Polyamid (N) Garn Nylon 6 ist.

4. Verstärkungsschicht aus einer Kappenlage nach Anspruch 2, **wobei** der Gehalt an dem aliphatischen Polyamid-(N) Garn aus einer Mischung aus Nylon 6.6 und Nylon 6 besteht.

5. Verstärkungsschicht aus einer Kappenlage nach Anspruch 1, **wobei** die linearen Dichten jeder der aliphatischen Polyamid (N) und der Polyester (P) Garn in einem Bereich von 200-3000 dtex liegen.

6. Verstärkungsschicht aus einer Kappenlage nach Anspruch 1, **wobei** der Unterschied zwischen den linearen Dichten jedes der aliphatischen Polyamid (N) und der Polyester (P) Garn maximal 20% beträgt.

7. Verstärkungsschicht aus einer Kappenlage nach Anspruch 1, **wobei** das aliphatische Polyamid (N) und die Polyester (P) Garn einen Vorverdrehungsgrad von Null aufweisen.

8. Verstärkungsschicht aus einer Kappenlage nach Anspruch 1, **wobei** der Verdrehungsgrad der aliphatischen Polyamid (N) und der Polyester (P) Garn in einem Bereich von 100-500 tpm liegt.

9. Verstärkungsschicht aus einer Kappenlage nach Anspruch 1, **wobei** der Verdrehungsgrad der aliphatischen Polyamid (N) und der Polyester (P) Garn in einem Bereich von 150-250 tpm liegt.

10. Verstärkungsschicht aus einer Kappenlage nach Anspruch 1, **wobei** der Verdrehungsgrad der aliphatischen Polyamid (N) und der Polyester (P) Garn Z während des Zusammendrehens ist.

11. Verstärkungsschicht aus einer Kappenlage nach Anspruch 1, **wobei** der Verdrehungsgrad der aliphatischen Polyamid (N) Garn und der Polyester (P) Garn während des Zusammendrehens S ist.

## Revendications

1. Couche de renforcement de nappe de sommet située entre au moins une bande de roulement et au moins une couche d'ensemble de ceinture d'un pneumatique radial, **caractérisée en ce que** ladite nappe de sommet est constitué d'au moins deux types de fils retordus pliés qui sont obtenus en combinant des fils non tordus l'un avec l'autre dans une direction, dans laquelle l'un desdits fils est un polyamide aliphatique (N) et l'autre est un polyester, et le rapport du polyester (P) dans ledit fil de polyester (P) est d'au moins 90% en poids, et le rapport du polyamide aliphatique (N) dans ledit fil de polyamide aliphatique (N) est d'au moins 90% en poids.

2. Couche de renforcement de nappe de sommet selon la revendication 1, **dans laquelle** ledit fil de polyamide aliphatique (N) est du nylon et ledit fil de polyester (P) est en polyéthylène téréphtalate (PET).

3. Couche de renforcement de nappe de sommet selon la revendication 2, **dans laquelle** ledit fil de polyamide aliphatique (N) est du nylon 6.

4. Couche de renforcement de nappe de sommet selon la revendication 2, **dans laquelle** le contenu dudit fil de polyamide aliphatique (N) est constitué d'un mélange de nylon 6.6 et de nylon 6.

5. Couche de renforcement de nappe de sommet selon la revendication 1, **dans laquelle** les densités linéaires de chacun desdits fils de polyamide aliphatique (N) et desdits fils de polyester (P) sont dans une plage de 200-3000 dtex.

6. Couche de renforcement de nappe de sommet selon la revendication 1, **dans laquelle** la différence entre les densités linéaires de chacun desdits fils de polyamide aliphatique (N) et desdits fils de polyester (P) est au maximum de 20%.

7. Couche de renforcement de nappe de sommet selon la revendication 1, **dans laquelle** ledit polyamide aliphatique (N) et lesdits fils de polyester (P) ont une valeur de niveau de pré-torsion de zéro.

8. Couche de renforcement de nappe de sommet selon la revendication 1, **dans laquelle** le niveau de torsion pliée dudit polyamide aliphatique (N) et desdits fils de polyester (P) est dans une plage de 100-500 tpm.

9. Couche de renforcement de nappe de sommet selon la revendication 1, **dans laquelle** le niveau de torsion pliée dudit polyamide aliphatique (N) et desdits fils de polyester (P) est compris entre 150-250 tpm.

10. Couche de renforcement de nappe de sommet selon la revendication 1, **dans laquelle** la direction de torsion pliée dudit polyamide aliphatique (N) et desdits fils de polyester (P) est Z pendant la torsion ensemble.

11. Couche de renforcement de nappe de sommet selon la revendication 1, **dans laquelle** la direction de torsion pliée dudit fil de polyamide aliphatique (N) et dudit fil de polyester (P) est S pendant la torsion ensemble.
